Europäisches Patentamt

European Patent Office

Office européen des brevets

(11) Veröffentlichungsnummer : **0 297 034 B1**

(12) **EUROPÄISCHE PATENTSCHRIFT**

(45) Veröffentlichungstag der Patentschrift :
**01.04.92 Patentblatt 92/14**

(51) Int. Cl.[5] : **B23Q 3/155**, B23Q 7/04,
B25J 18/00

(21) Anmeldenummer : **88810356.1**

(22) Anmeldetag : **01.06.88**

(54) **Magazin mit Wechselvorrichtung.**

(30) Priorität : **16.06.87 DE 3720180**

(43) Veröffentlichungstag der Anmeldung :
**28.12.88 Patentblatt 88/52**

(45) Bekanntmachung des Hinweises auf die
Patenterteilung :
**01.04.92 Patentblatt 92/14**

(84) Benannte Vertragsstaaten :
**AT BE CH DE ES FR GB GR IT LI LU NL SE**

(56) Entgegenhaltungen :
EP-A- 0 132 599
EP-A- 0 154 349
DD-A- 237 807
DE-A- 2 110 943
GB-A- 2 097 359
VDI-ZEITSCHRIFT, Band 125, Nr. 3, Februar
1983, Seiten 71-73, Düsseldorf, DE; "Flexible
Drehzelle mit automatisierten Palettiersystem"
IDEM

(56) Entgegenhaltungen :
SOVIET INVENTIONS ILLUSTRATED, Woche
8628, 25. Juli 1986, Sektion General/Mechani-
cal, Nr. 86-181735/28, Derwent Publications
Ltd, London, GB; & SU-A-1196 207 (V.A. KRO-
POTKIN) 07-12-1985
PATENT ABSTRACTS OF JAPAN, Band 12, Nr.
126 (M-687)[2973], 19. April 1988; & JP-A-62 251
040 (OKUMA MACH. WORKS LTD) 31-10-1987
WERKSTATTSTECHNIK, ZEITSCHRIFT FÜR
INDUSTRIELLE FERTIGUNG, Band 76, Nr. 10,
Oktober 1986, Seiten 585-589, Springer-Verlag,
Berlin, DE; D. SCHELLENBERGER et al.:
"Möglichkeiten und Trends bei der automatischen Werkstückhandhabung mit Industrierobotern"

(73) Patentinhaber : **Erowa AG**
**Winkelstrasse 8**
**CH-5734 Reinach (CH)**

(72) Erfinder : **Schneider, Rudolf**
**Gondiswinkel**
**CH-5734 Reinach (CH)**

(74) Vertreter : **Rottmann, Maximilian R.**
**c/o Rottmann, Maspoli + Zimmermann AG**
**Glattalstrasse 37**
**CH-8052 Zürich (CH)**

EP 0 297 034 B1

## Beschreibung

Die vorliegende Erfindung bezieht sich auf eine Wechselvorrichtung für eine Werkzeugmaschine mit einem Magazin zur Entnahme eines Werkzeugs oder Werkstückes aus dem Magazin und zum Transport desselben in die Werkzeugmaschine bzw. zur Entnahme desselben aus der Werkzeugmaschine und zum Transport desselben in das Magazin, wobei das Magazin eine Mehrzahl von koaxial angeordneten, um eine erste Achse drehbaren, im wesentlichen scheibenförmigen Werkzeug- oder Werkstückträgern aufweist, entlang deren Peripherie die Werkzeuge oder Werkstücke aufgenommen sind, wobei ein im Abstand von der ersten Achse um eine zweite Achse schwenkbar gelagerter, entlang der zweiten Achse höhenverstellbarer, in der Länge verstellbarer und mit einem Greiforgan versehener Transportarm vorgesehen ist, und wobei der Transportarm mit einem Drehgelenk versehen ist, dessen Drehachse sich in einem Winkel von 45° zur Längsverstellrichtung des Transportarmes erstreckt.

Bei manchen Bearbeitungsvorgängen an ein und demselben Werkstück ist es erforderlich, im Lauf der Bearbeitung das von der Bearbeitungseinrichtung verwendete Werkzeug mehrmahls zu wechseln, insbesondere, wenn die Steuerung der Bearbeitungseinrichtung mehr oder weniger automatisch erfolgt und somit in der Lage ist, eine Vielzahl von nacheinander ablaufenden Bearbeitungsvorgängen an ein und demselben Werkstück auszuführen. Um diesen selbsttätig ablaufenden Bearbeitungsvorgang nicht zu stören bzw. nicht zu unterbrechen, sind automatisch arbeitende Werzeugwechselvorrichtungen geschaffen worden, die gegebenenfalls auch vom Maschinenprogramm gesteuert werden können.

Diese Probleme stellen sich in besonderem Masse bei der elektroerosiven Bearbeitung von Werkstücken, da dies ein verhältnismässig langsam fortschreitender Bearbeitungsvorgang ist, somit vermehrt das Bestreben besteht, den Vorgang zu automatisieren. So sind beispielsweise bei elektroerosiven Bearbeitungseinrichtungen Elektrodenwechsler bekannt, bei denen ein endlos umlaufendes, in der Art einer Kette ausgebildetes Elektrodenmagazin vorgesehen ist. Ein Greifarm hat die Aufgabe, eine ausgewählte Elektrode zu erfassen und in die Bearbeitungseinrichtung einzusetzen bzw. aus der Bearbeitungseinrichtung zu entfernen und in das Magazin zurückzulegen. Damit bei der Entnahme aus dem Magazin die richtige Elektrode ergriffen wird, bzw. damit bei der Ablage in das Magazin die Elektrode wieder ihren vorbestimmten Platz einnimmt, muss ein derartiges Umlaufmagazin solange angetrieben werden, bis sich die ausgewählte Elektrode bzw. der vorbestimmte Ablageplatz im Bereich des Greifarmes befindet.

Der Nachteil derartiger Elektrodenwechsler ist einerseits der grosse Platzbedarf und andererseits die relativ grosse Zugriffszeit, isbesondere, wenn eine grosse Anzahl von Elektroden im Magazin abgelegt werden und für einen allfälligen Zugriff bereit sein sollen. Um diese Nachteile zu vermeiden, hat man vorgeschlagen, das Werkzeugmagazin mit einer Mehrzahl von um eine erste Achse drehbaren, im wesentlichen scheibenförmigen Werkzeugträgern auszubilden, entlang deren Peripherie die Werkzeuge angeordnet sind, und einen Transportarm vorzusehen, der um eine im Abstand dazu angeordnete, zweite Achse verschwenkbar ist, um die Werkzeuge zu ergreifen, aus dem Magazin zu nehmen und in die Bearbeitungseinrichtung einzusetzen bzw. vice versa.

Eine solche Einrichtung besitzt eine wesentlich kürzere Zugriffszeit und einen verringerten Platzbedarf.

Ein Nachteil jedoch ist, dass eine solche Einrichtung nicht universell einsetzbar ist. Zum einen arbeiten moderne Bearbeitungszentren, mit eingeschlossen elektroerosive Bearbeitungseinrichtungen, oft mit mehreren Bezungsachsen, d.h. eine Elektrode oder ein Werkstück muss entweder senkrecht oder waagrecht eingespannt werden; zum anderen tritt auch der Fall ein, dass mit einem einzigen, nicht auszuwechselnden Werkzeug, z.B. mit einer einzigen Elektrode, nacheinander eine Vielzahl von Werkstücken zu bearbeiten ist. Daraus lässt sich die Forderung ableiten, dass eine Vorrichtung der gattungsgemässen Art derart universell sein müsste, dass sie einerseits Werkzeuge in mehreren Bezungsachsen in die Bearbeitungseinrichtung einzusetzen imstande ist, andererseits aber auch dazu eingesetzt werden sollte, Werkstücke zu wechseln.

Es ist die Aufgabe der vorliegenden Erfindung, ausgehend vom Stand der Technik, wie er z.B. im Aufsatz "Flexible Drehzelle mit automatisiestem Palettierzystem" (VDI - Zeitschrift Band 125 Nr.3, Februar 1983, Seiten 71-73) beschrieben und im Oberbegriff des Patentanspruchs 1 definiert ist, eine Verbesserung zu schaffen, die die vorstehend genannten Forderungen zu erfüllen in der Lage ist, namentlich bei kompaktem Aufbau und kurzer Zugriffszeit bei nahezu beliebigen Bearbeitungseinrichtungen sowohl Werkzeuge mit horizontaler oder vertikaler Bezugsachse als auch Werkstücke, die in horizontaler oder vertikaler Richtung eingespannt werden, zu wechseln.

Diese Aufgabe wird durch die im Kennzeichen des Patentanspruchs 1 angegebenen Massnahmen gelöst. Weiterbildungen des Erfindungsgegenstands sind in den abhängigen Ansprüchen 2 und 3 angegeben.

Durch die erfindungsgemäss vorgesehene Gestaltung des Tragarms ergibt sich auf überraschend einfache Weise eine Freiheit in der Bewegung des Greiforgans, die bei solchen Vorrichtungen bisher unbekannt war. Damit ist die universelle Einsetzbarkeit der Magazin-Wechsler-Einheit gewährleistet, da das Greiforgan Zugriff selbst zu engen, schlecht zugänglichen Stellen hat, und es ist nur noch Sache der Steuerungs-Anpassung, die erfindungsgemäss ausgebildete Vorrichtung zusammen mit einer Vielzahl von Bearbeitungseinrichtungen einzusetzen.

Insbesondere ergibt sich durch die erfindungsgemässe Ausbildung der folgende Vorteil:

Wenn nämlich die Länge der beiden Schenkel bzw. die Krümmung des Tragarmelementes derart bemessen ist, dass eine durch die Drehachse des Drehgelenkes gelegte Gerade durch einen Mittelpunkt des Greiforganes verläuft, in welchem die Mittelachse eines vom Greiforgan aufgenommenen Werkzeuges bzw. Werkstückes liegt, kann durch eine 180°-Drehung des Drehgelenkes eine Verschwenkung des Werkzeuges bzw. des Werkstückes um 90° ohne eigentliche Verschiebung, durch einen festen Verschwenkungspunkt, erzielt werden. Dies vereinfacht die Steuerung in entscheidendem Mass.

Im folgenden wird ein Ausführungsbeispiel der erfindungsgemässen Vorrichtung anhand der beiliegenden Zeichnungen näher erläutert. Es soll darauf hingewiesen werden, dass in der folgenden, beispielshaften Beschreibung die Vorrichtung einfachheitshalber im Zusammenhang mit einer Senkerodiermaschine beschrieben wird; es versteht sich aber, dass der Anwendungsbereich keinesfalls auf Erodiermaschinen der dargestellten Art beschränkt ist; vielmehr ist ein vorteilhafter Einsatz mit einer Vielzahl von Bearbeitungseinrichtungen denkbar, bei denen Werkzeuge und/oder Werkstücke automatisch gewechselt werden sollen.

In den beiliegenden Zeichnungen zeigen:

Fig. 1 eine schematische Ansicht einer Senkerodiermaschine und einer Magazin-Wechsler-Einheit von vorne;

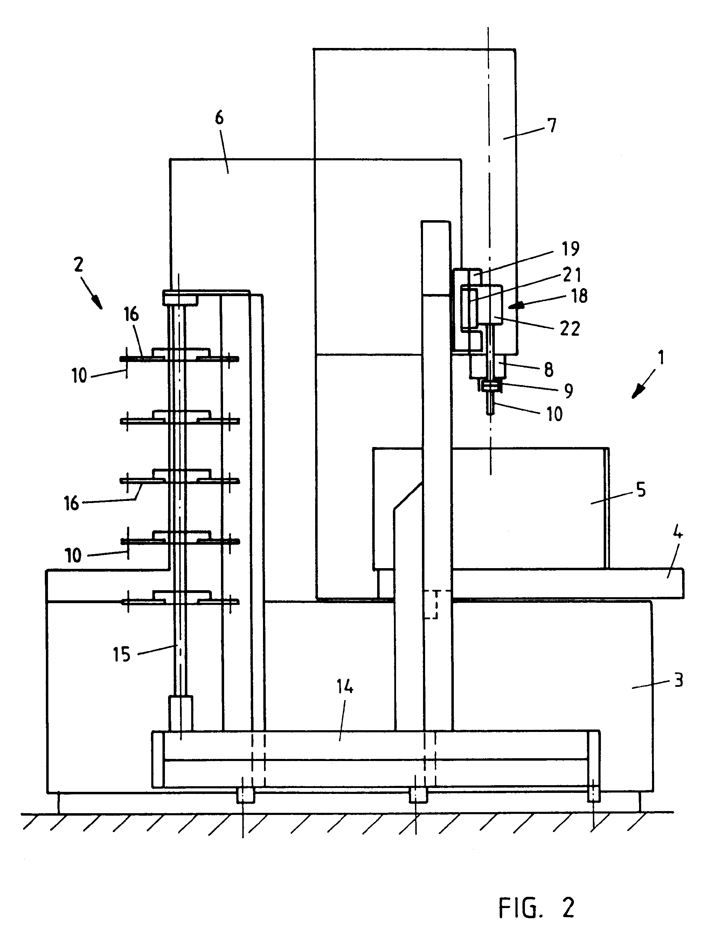

Fig. 2 eine schematische Ansicht der Senkerodiermaschine und der Magazin-Wechsler-Einheit gemäss Fig. 1 von der Seite, in Richtung des Pfeiles II in Fig. 1; und

Fig. 3 eine schematische Ansicht der Senkerodiermaschine und der Magazin-Wechsler-Einheit gemäss Fig. 1 von oben.

In den Zeichnungen ist generell mit 1 eine Senkerodiermaschine und mit 2 eine Magazin-Wechsler-Einheit dargestellt. Die Erodiermaschine umfasst eine Basis 3, auf der ein in X- und Y-Richtung verschiebbarer Tisch 4 gelagert ist. Der Tisch 4 trägt eine oben offene Wanne 5, die zur Aufnahme der für den Erodierprozess erforderlichen Flüssigkeit dient. An der Basis 3 ist ferner eine Säule 6 angebracht, die den Maschinenkopf 7 trägt. Im Maschinenkopf 7 ist eine Pinole 8 in Z-Richtung, d.h. höhenverstellbar, und gegebenenfalls verdrehbar aufgenommen. Die Pinole 8 ist mit einem Spannfutter 9 zur Aufnahme eines nur schematisch angedeuteten Bearbeitungswerkzeuges 10, namentlich einer Erodierelektrode, versehen. In der Wanne 5 ist eine Werkstückaufnahme 11 angeordnet, die ein zu bearbeitendes Werkstück 12 aufnimmt.

Der genauere Aufbau und die Wirkungsweise einer solchen Erodiermaschine ist dem mit der Materie vertrauten Fachmann bekannt und braucht hier nicht näher erläutert zu werden.

Die Magazin-Wechsler-Einheit 2 umfasst einen Grundrahmen 14, der als Basis für ein Magazin und einen Transportarm dient. Das Magazin besitzt eine aufrechte Säule 15, die drehbar ist und eine Anzahl von im Abstand angeordneten, scheibenförmigen Werkzeugträgern 16 aufnimmt. Entlang des Umfanges der scheibenförmigen Werkzeugträger 16 sind die nur schematisch angedeuteten Werkzeuge 10 untergebracht, z.B. in periphere Schlitze der Werkzeugträger 16 eingeschoben.

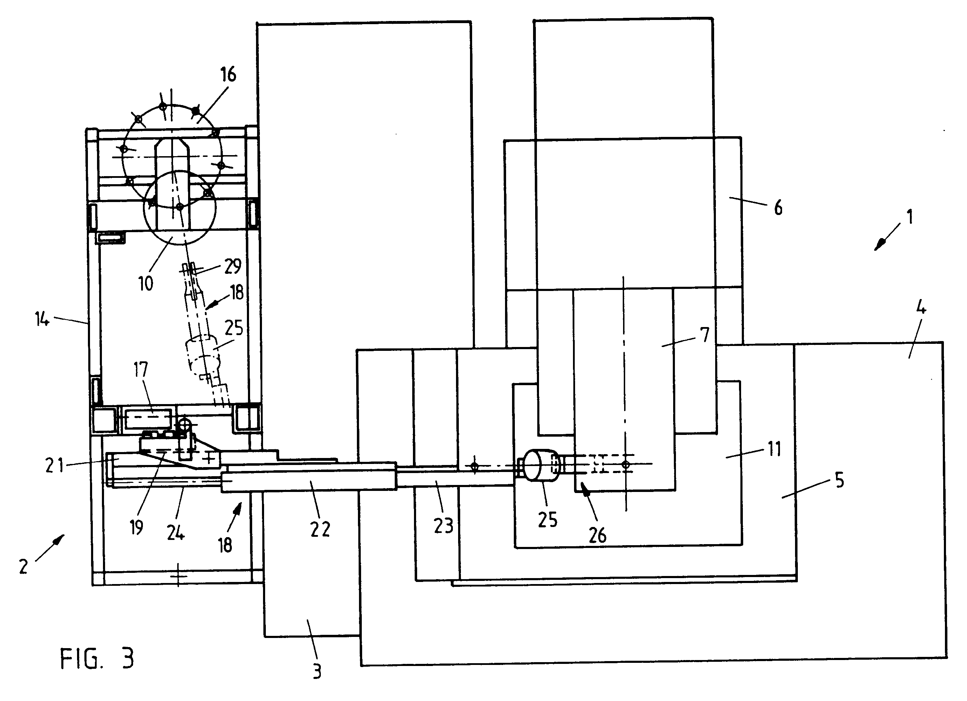

Der Grundrahmen 14 nimmt ferner eine im Abstand zur Magazinsäule 15 angeordnete Tragsäule 17 für einen generell mit 18 bezeichneten Transportarm auf. Die Tragsäule 17 besitzt einen Schlitten 19, der entlang der Säule 17 verschiebbar ist, z.B. mit Hilfe eines pneumatischen Zylinders 20. Der eigentliche Transportarm 18 umfasst drei Armteile: Einen festen Armteil 21, der am Schlitten 19 befestigt ist, einen ersten teleskopartig verschiebbaren Armteil 22 und einen zweiten teleskopartig verschiebbaren Armteil 23. Die gegenseitige Verschiebung der Armteile 22 und 23 mit Bezug auf den Armteil 21 kann durch einen im Armteil 22 untergebrachten Pneumatikzylinder erfolgen, von dem in Fig. 3 nur die Kolbenstange 24 zu sehen ist.

Am freien Ende des zweiten, teleskopartig verschiebbaren Arm teiles 23 ist ein Drehgelenk 25 angebracht, an dem ein Tragarmelement 26 befestigt ist. Im Beispielsfall umfasst das Tragarmelement 26 zwei Schenkel 27 und 28, die rechtwinklig zueinander angeordnet sind, wobei der nicht mit dem Drehgelenk 25 verbundene Schenkel 28 an seinem freien Ende ein Greiforgan 29 zur Erfassung eines Werkzeuges oder Werkstückes trägt.

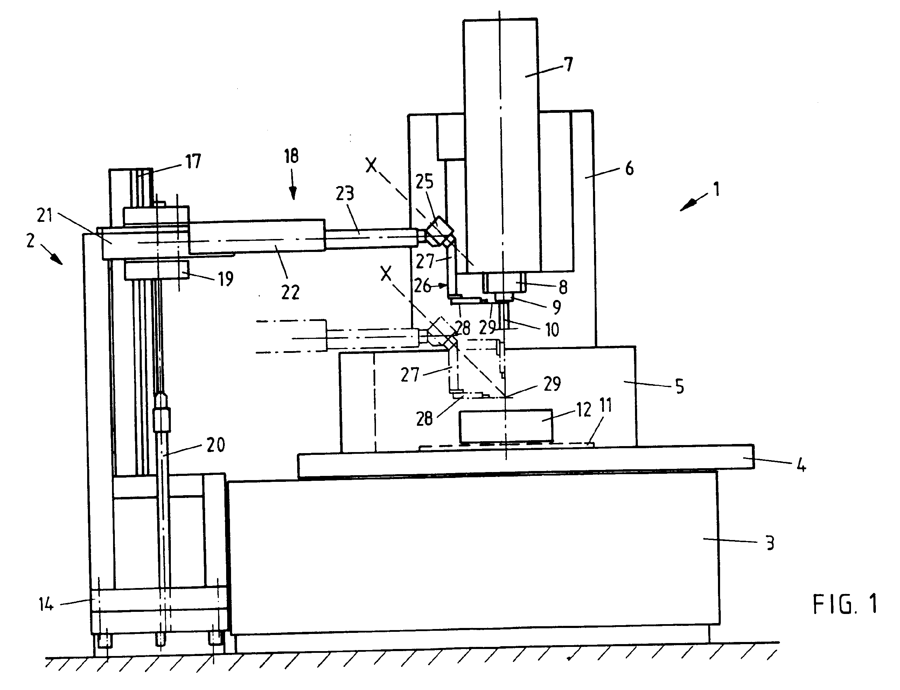

Das Drehgelenk besitzt eine Gelenkachse X, die in einem Winkel von 45° zur Längenausdehnung der Tragarmteile 22 und 23 verläuft. Um diese Achse X lässt sich der Schenkel 27 und somit das gesamte Tragarmelement 26 samt Greiforgan 29 verdrehen. Wie es in Fig. 1 gestrichelt angedeutet ist (der Schlitten 19 ist dabei etwas abgesenkt), verläuft in einer ersten Drehposition der Schenkel 27 vertikal und der Schenkel 28 horizontal, während nach einer Verdrehung des Drehgelenkes 25 um 180°, in einer zweiten Drehposition, der Schenkel 27 horizontal und der Schenkel 28 vertikal verläuft. Die Länge der Schenkel 27 und 28 ist vorzugsweise derart bemessen, dass die verlängerte Drehachse X durch einen Mittelpunkt des Greiforgans 29 verläuft; in diesem Mittelpunkt liegt die Mittelachse eines von Greiforgan 29 getragenen Werkzeuges oder Werkstückes. Damit ist erreicht, dass jener Mittelpunkt, wie aus Fig. 1 in der gestrichelten Darstellung deutlich zu sehen ist, sowohl in der ersten als auch der zweiten Drehposition des Drehgelenkes 25 stets an genau der gleichen Stelle bleibt.

Eine andere, nicht in den Zeichnungen dargestellte Möglichkeit besteht darin, das Tragarmelement 26 bogenförmig auszubilden, wobei dann die Krümmung ebenfalls so bemessen wäre, dass die Verlängerung der Drehachse X durch den erwähnten Mittelpunkt des Greiforganes 29 verläuft; der erwünschte Effekt würde sich auch hier einstellen.

Die Funktion der Vorrichtung ist an sich bekannt: Der Tragarm 18 wird in eingefahrenem Zustand, wie in Fig. 3 gestrichelt angedeutet, zum Magazin hin verschwenkt und der Schlitten 19 wird entlang der Säule 17 in eine solche Höhe verfahren, dass das Greiforgan 29 auf der Höhe des gewünschten Werkzeugträgers 16 ist. Dann wird der Arm 18 etwas ausgefahren, das Werkzeug 10 wird ergriffen, der Arm 18 etwas zurückgezogen und anschliessend in die in Fig. 3 ausgezogen dargestellte Lage verschwenkt, um nach erfolgtem Ausfahren der Armteile 22 und 23 das vom Greiforgan 29 ergriffene Werkzeug zur Bearbeitungseinrichtung zu bringen. Je nachdem, wo das ergriffene Werkzeug bzw. ein allenfalls ergriffenes Werkstück eingesetzt werden soll, wird die Höhenlage des Schlittens 19 geändert.

Jedenfalls ist wesentlich, dass das Tragarmelement 26 eine von einer Geraden abweichende Form, namentlich eine winklige oder gekrümmte Formgebung, aufweist. Wie aus Fig. 1 deutlich zu entnehmen ist, kann so das Tragarmelement 26 in einer ersten, angehobenen Position (ausgezogen gezeichnet) am Maschinenkopf 7 vorbeifahren, um mittels des Greiforganes 29 ein Werkzeug 10 in das Spannfutter 9 der Pinole 8 einzusetzen. Gleichermassen ist es aber so auch möglich, mit dem Greiforgan 29 in die Wanne 5 hineinzufahren (gestrichelte Darstellung), um ein Werkstück 12 auf der Wekstückaufnahme 11 abzulegen.

Je nach Werkstück kann es erforderlich sein, dass das Greiforgan 29 von oben her oder von der Seite her angreift. Dies lässt sich durch einfache Rotation des Drehgelenkes 25 um 180° erreichen, wobei einerseits gewährleistet bleibt, dass sich der Mittelpunkt des Greiforgans 29 nicht verschiebt, und andererseits, dass wiederum in die Wanne 5 hineingetaucht werden kann.

Die erfindungsgemässe Vorrichtung ist also sehr universell einsetzbar und an zahlreiche Bearbeitungsmaschinen anpassbar. Dies ist insbesondere dann der Fall, wenn das Werkzeugmagazin und die Werkzeug-Wechselvorrichtung bzw. das Werkstückmagazin und die Werkstück-Wechselvorrichtung zusammen mit einer zugeordneten Steuervorrichtung eine kompakte, physische Einheit bilden, die, wie in den Zeichnungen gezeigt, einfach neben eine Bearbeitungseinrichtung gestellt werden kann. Ein grosser Teil der Steuerung, nämlich die Bewegung des Transportarms 18 mit Bezug auf das Magazin, bleibt unverändert; lediglich derjenige Geil der Steuerung, der sich auf die Bewegung des Transportarms 18 mit Bezug auf die Bearbeitungseinrichtung bezieht, muss von Fall zu Fall angepasst werden.


**Patentansprüche**

1. Wechselvorrichtung für eine Werkzeugmaschine (1) mit einem Magazin zur Entnahme eines Werkzeugs (10) oder Werkstückes (12) aus dem Magazin und zum Transport desselben (10, 12) in die Werkzeugmaschine (1) bzw. zur Entnahme desselben (10, 12) aus der Werkzeugmaschine (1) und zum Transport desselben (10, 12) in das Magazin, wobei das Magazin eine Mehrzahl von koaxial angeordneten, um eine erste Achse (15) drehbaren, im wesentlichen scheibenförmigen Werkzeug- oder Werkstückträgern (16) aufweist, entlang deren Peripherie die Werkzeuge (10) oder Werkstücke (12) aufgenommen sind, wobei ein im Abstand von der ersten Achse (15) um eine zweite Achse (17) schwenkbar gelagerter, entlang der zweiten Achse höhenverstellbarer, in der Länge verstellbarer und mit einem Greiforgan (29) versehener Transportarm (18) vorgesehen ist, und wobei der Transportarm (18) mit einem Drehgelenk (25) versehen ist, dessen Drehachse (X) sich in einem Winkel von 45° zur Längsverstellrichtung des Transportarmes (18) erstreckt, dadurch gekennzeichnet, dass ein abgewinkeltes oder bogenförmiges Tragarmelement (26) vorgesehen ist, das einerends am Drehgelenk (25) angeschlossen ist und andernends das Greiforgan (29) trägt, wobei die Dimensionen sowie die Abwinklung bzw. Krümmung des Tragarmelementes (26) derart bemessen sind, dass eine durch die Drehachse (X) des Drehgelenkes (25) gelegte Gerade durch einen Mittelpunkt des Greiforganes (29) verläuft, in welchem die Mittelachse eines vom Greiforgan (29) aufgenommenen Werkzeuges (10) oder Werkstückes (12) liegt.

2. Wechselvorrichtung nach Patentanspruch 1, dadurch gekennzeichnet, dass das Tragarmelement (26) L-förmig ausgebildet ist.

3. Wechselvorrichtung nach Patentanspruch 2, dadurch gekennzeichnet, dass die beiden Schenkel (27, 28) des L-förmigen Tragarmelementes (26) einen rechten Winkel einschliessen.

## Claims

1. Changing device for a machine tool (1) with a magazine for removing a tool (10) or work-piece (12) from the magazine and for transportation thereof (10, 12) into the machine tool (1) or for the removal thereof (10, 12) from the machine tool (1) and for transportation thereof (10, 12) into the magazine, the magazine comprising a plurality of substantially disc-shaped tool or work-piece supports (16) arranged coaxially and able to rotate about a first shaft (15), along the periphery of which supports the tools (10) or work-pieces (12) are received, a transportation arm (18) being provided, which is mounted to tilt about a second shaft (17) at a distance from the first shaft (15), is vertically adjustable along the second shaft, is adjustable in its length and is provided with a gripping member (29), and the transportation arm (18) being provided with a swivel joint (25), whereof the axis of rotation (X) extends at an angle of 45° with respect to the longitudinal adjusting direction of the transportation arm (18), characterised in that a bent or curved support arm member (26) is provided, which at one end is connected to the swivel joint (25) and at the other end supports the gripping member (29), the dimensions and the bend or curvature of the support arm member (26) being proportioned so that a straight line passing through the axis of rotation (X) of the swivel joint (25) extends through a centre point of the gripping member (29), at which the central axis of a tool (10) or work-piece (12) received by the gripping member (29) is located.

2. Changing device according to Patent Claim 1, characterised in that the support arm member (26) is constructed to be L-shaped.

3. Changing device according to Patent Claim 2, characterised in that the two legs (27, 28) of the L-shaped support arm member (26) enclose a right angle.

## Revendications

1. Dispositif changeur pour une machine-outil (1) comportant un magasin pour y prélever un outil (10) ou une pièce (12) et le ou la (10, 12) transporter à la machine-outil (1), ou encore pour le ou la (10, 12) prélever dans la machine-outil (1) et le ou la (10, 12) transporter au magasin, le magasin présentant une pluralité de porte-outils ou porte-pièces (16) sensiblement en forme de plateau, agencés coaxialement, capables de tourner autour d'un premier axe (15), le long de la périphérie desquels les outils (10) ou les pièces (12), sont reçus, un bras de transport (18) étant prévu qui est monté à distance du premier axe (15), cela avec possibilité de pivotement autour d'un deuxième axe (17), avec possibilité de réglage en hauteur le long du deuxième axe et avec possibilité de réglage en longueur, ce bras de transport (18) étant muni d'un organe de préhension (29) et d'un joint d'articulation tournant (25) dont l'axe de rotation (X) s'étend selon selon un angle de 45° par rapport à la direction de déplacement longitudinal du bras de transport (18), caractérisé par le fait qu'il est prévu un élément à bras porteur (26), coudé ou arqué, qui est rattaché en une extrémité au joint d'articulation tournant (25) et qui, en son autre extrémité, porte l'organe de préhension (29), les dimensions ainsi que le coudage ou, selon le cas, la courbure de l'élément à bras porteur (26) étant tels qu'une droite passant par l'axe de rotation (X) du joint d'articulation tournant (25) passe par un centre de l'organe de préhension (29), l'axe central d'une pièce (12) ou d'un outil (10) reçu par l'organe de préhension (29) se trouvant audit centre.

2. Dispositif changeur selon revendication 1, caractérisé par le fait que l'élément à bras porteur (26) est réalisé en forme de L.

3. Dispositif changeur selon revendication 2, caractérisé par le fait que les deux branches (27, 28) de l'élément à bras porteur en forme de L (26) forment un angle droit.

FIG. 1

FIG. 2

FIG. 3

EP 0 297 034 B1